# EUROPÄISCHE PATENTSCHRIFT

(11) **EP 3 850 246 B1**
(45) Veröffentlichungstag und Bekanntmachung des Hinweises auf die Patenterteilung: **12.04.2023**
(21) Anmeldenummer: 19766020.2
(22) Anmeldetag: 10.09.2019
(51) Int. Cl.: F16H 57/022, F16H 57/038

(54) **GETRIEBE**
TRANSMISSION
TRANSMISSION

(30) Priorität: 11.09.2018 DE 202018105205 U
(43) Veröffentlichungstag der Anmeldung: 21.07.2021
(60) Teilanmeldung: 23158233.9
(73) Patentinhaber: KUKA Deutschland GmbH, 86165 Augsburg (DE)
(72) Erfinder: HANDFEST, Alexander, 86568 Hollenbach (DE); LIEBL, Franz, 86551 Aichach (DE)
(74) Vertreter: Böss, Dieter Alexander
(86) Internationale Anmeldenummer: PCT/EP2019/074019
(87) Internationale Veröffentlichungsnummer: WO 2020/053163

(56) Entgegenhaltungen:
- WO-A1-99/60289
- DD-A- 31 270
- DE-A1-102015 200 741
- DE-A1-102015 225 923
- DE-T2- 60 017 982
- GB-A- 2 076 931
- US-A- 3 826 151

## Beschreibung

Die Erfindung betrifft ein Getriebe, aufweisend ein Getriebegehäuse, eine im Getriebegehäuse mittels einer ersten Lageranordnung drehbar gelagerte Antriebswelle, die ein erstes Kegelrad aufweist und eine im Getriebegehäuse mittels einer zweiten Lageranordnung drehbar gelagerte Abtriebswelle, die ein zweites Kegelrad aufweist, das mit dem ersten Kegelrad kämmend in Eingriff ist, sowie eine Einstellvorrichtung zum Einstellen des Zahnflankenspiels zwischen dem ersten Kegelrad und dem zweiten Kegelrad durch axiales Verstellen des ersten Kegelrades und/oder des zweiten Kegelrades.

Die DE 34 48 526 C2 beschreibt einen Manipulator mit einem Getriebekopf, der wenigstens ein antriebsseitiges Kegelrad und ein abtriebsseitiges Kegelrad aufweist, das mit dem antriebsseitigen Kegelrad kämmend in Eingriff ist.

Die DE 10 2015 200 741 A1 beschreibt ein Getriebe mit einer ersten und einer zweiten Welle, die jeweils über ein Kegelzahnrad verfügen, wobei die beiden Kegelzahnräder sich in kämmendem Eingriff miteinander befinden. Die erste Welle mit dem ersten Kegelzahnrad ist als axial einstellbare Welle ausgebildet und dabei mit zwei Wälzlagern beidseitig des Kegelzahnrades gelagert. Die gehäuseseitigen Außenringe der Wälzlager sind auf der dem Kegelzahnrad abgewandten Seite jeweils durch eine Einstellvorrichtung hinsichtlich ihrer Axiallage einstellbar, wobei die die Einstellvorrichtungen jeweils auf der dem Kegelzahnrad abgewandten Seite des jeweiligen Außenrings über ein Einstellelement mit einem Außengewinde verfügen, welches in ein gehäuseseitiges Innengewinde eingesetzt ist, wobei das Innengewinde und das Außengewinde als Feingewinde ausgebildet sind, vorzugsweise mit einer Steigung von maximal 0,75 mm.

Die WO 99/60289 A1 beschreibt ein Getriebe mit einem ersten Zahnrad und einem zweiten Zahnrad, die miteinander in Eingriff stehen. Die Zähne der ineinandergreifenden Zahnräder sind kegelig, so dass der Zahneingriff durch eine axiale Verschiebung des zweiten Zahnrads einstellbar ist. Das Getriebe umfasst ein erstes kraftübertragendes Verstellelement, das dazu geeignet ist, das zweite Zahnrad in einer ersten axialen Richtung zu verlagern und ein zweites kraftübertragendes Verstellelement, welches das zweite Zahnrad in die entgegengesetzte Richtung verlagert.

Die DE 600 17 982 T2 beschreibt eine elektrische Servolenkvorrichtung zum Übertragen der Drehkraft eines Lenkunterstützungsmotors auf eine Schneckenwelle, die eine Schnecke aufweist und über ein Lager drehbar in einem Getriebegehäuse gelagert ist, und auf eine Lenkwelle mit einem Schneckenrad, das mit der Schnecke kämmt, und zur Lenkunterstützung, wobei die Vorrichtung ein Lagergehäuse mit einem Halteloch aufweist, in dem das Lagereingesetzt und gehalten ist, und einen Mechanismus zum Dezentrieren des Lagers in Richtung des Schneckenrads aufweist, wobei bei Einstellen des Dezentriermechanismus durch einen Einstellmechanismus die Schneckenwelle in Wellenlängsrichtung mitbewegt wird.

Die GB 2 076 931 A beschreibt eine Wellenlagerung mit einer Ritzelwelle, die über zwei axial beabstandete Lager drehbar in einem Getriebegehäuse gelagert ist und an einem Ende ein Ritzel trägt. Das erste Lager befindet sich nahe dem Ritzel und ermöglicht eine axiale Bewegung der Welle gegenüber dem Getriebegehäuse. Das zweite Lager ist axial relativ zur Welle fixiert und ist zusammen mit seinem Sitz axial relativ zum Getriebegehäuse beweglich. Es sind Mittel vorgesehen, um das zweite Lager und die Welle axial zu bewegen und axial in Position zu halten, so dass das Ritzel relativ zu einem Kronrad eingestellt werden kann. Die Dokuemnte DD31270A sowie US3826151 A zeigen die Merkmale des Oberbegriffs des Anspruchs 1.

Aufgabe der Erfindung ist es, ein Getriebe zu schaffen, bei dem das Zahnflankenspiel zwischen einem ersten Kegelrad und einem zweiten Kegelrad besonders genau und insbesondere auf einfache Weise einstellbar ist.

Die Aufgabe wird erfindungsgemäß gelöst durch ein Getriebe mit den Merkmalen des Patentanspruchs 1.

Zum optimalen Lauf sollte ein Kegelradpaar ein definiertes Tragbild und Flankenspiel aufweisen. Da sowohl die Kegelräder selber, als auch die sonstigen strukturellen Bauteile Toleranzen aufgrund der Fertigungsprozesse aufweisen, kann der optimale Lauf nur durch einen Einstellprozess bei der Montage erreicht werden.

Klassisch werden Abstimmscheiben an geeigneter Stelle in der mechanischen Anbindung des Kegelrades eingebaut, um das Kegelrad durch Zulegen oder Wegnehmen der Abstimmscheiben in seiner Position axial zu verschieben. Nachteil dieser Methode ist die Notwendigkeit der genauen Vermessung aller beteiligten Bauteile zur Ermittlung des Einbaumaßes, sowie die limitierte Einstellgenauigkeit durch die Dicke der Abstimmscheibe.

Eine genauere Einstellung des Flankenspiels kann erreicht werden, indem mindestens eines der beiden Kegelräder durch Drehung eines Gewindes axial zugestellt wird. Dies ermöglicht eine stufenlose Einstellung, das Einstellmaß kann genauer erreicht werden, der Prozess ist Montage freundlicher und die genaue Vermessung der Bauteile entfällt.

Kritik an der Kegelradeinstellung mittels Gewinde ist die konstruktiv schwierige axiale Fixierung der Position nach erfolgter Zustellung. Eine Möglichkeit stellt das Vorspannen der Gewindepartner dar. Die Vorspannkraft muss deutlich höher als die auftretenden, insbesondere axialen Betriebslasten sein, um ein ungewolltes Verdrehen am Gewinde auszuschließen.

Indem die Einstellvorrichtung ein Wälzlager umfasst, das einen mit der Antriebswelle oder der Abtriebswelle fest verbundenen Innenring und einen im Getriebegehäuse axial verstellbar gelagerten Außenring aufweist, wobei die axiale Position des Außenrings des Wälzlagers mittels einer Gewindeanordnung einstellbar ist, die ein im Getriebegehäuse festgelegtes Innengewinde und ein mit dem Innengewinde zusammenwirkendes Außengewinde aufweist, das an einer Verstellmutter der Einstellvorrichtung ausgebildet ist, an der sich der Außenring abstützt, kann ein Getriebe geschaffen werden, bei dem das Zahnflankenspiel zwischen einem ersten Kegelrad und einem zweiten Kegelrad besonders genau und insbesondere auf einfache Weise einstellbar ist.

Das einzustellende Kegelrad kann erfindungsgemäß mittels eines verstellbaren Wälzlagers einstellbar sein. In einer speziellen Ausführungsform kann dies beispielsweise mittels einer Fest-Los-Lagerung erfolgen. Dadurch kann die Position des Kegelrads am Festlager eingestellt werden. Bei dieser Lösung wird das Festlager in einem Lagerflansch fixiert, welcher ein Gewinde am Außendurchmesser aufweist. Die Zustellung des Kegelrades erfolgt somit durch Drehung des Lagerflansches. Die Steigung des Gewindes ist mit beispielsweise 1 mm sehr klein gewählt, um eine möglichst feine Einstellung des Flankenspiels zu ermöglichen.

Nach erfolgter Kegelradeinstellung wird ein Klemm-/ Zentrierflansch in der umliegenden Struktur verschraubt. Zum einen dient dieser zweite Klemm-/ Zentrierflansch der Klemmung des Lagerflansches. Der Zentrierflansch drückt den Lagerflansch in sein Gewinde am Außenring, wodurch der Lagerflansch geklemmt und somit eine ungewollte Verdrehung verhindert wird.

Das Gewinde zum Einstellen des Kegelrades kann durch seine Funktion und durch den Fertigungsprozess Toleranz und Spiel behaftet sein. Das axiale Spiel wird deshalb durch die Klemmung aufgehoben. Das radiale Spiel bzw. der Rundlauf des Kegelrades kann durch eine zweite Funktion des Zentrierflansches korrigiert werden. Durch ausgewählte Passungen am Zentrierflansch, der Struktur und dem Lagerflansch wird der Lagerflansch und damit das Kegelrad bei Montage des Zentrierflansches in der gewünschten radialen Position zentriert.

In der grundlegenden Ausführung kann die Verstellmutter einen Lagerringsitz aufweisen, in dem der Außenring des Wälzlagers axial fixiert ist, wobei die Verstellmutter eine Außenmantelwand aufweist, an der das mit dem Innengewinde des Getriebegehäuses zusammenwirkende Außengewinde ausgebildet ist.

In der grundlegenden Ausführung kann die Gewindeanordnung, insbesondere das Innengewinde des Getriebegehäuses und das Außengewinde der Verstellmutter optional als ein Feingewinde ausgebildet sein, insbesondere als ein Feingewinde mit der Steigung 1.0, 0.75 oder 0.5 ausgebildet sein.

In der erfindungsgemäßen Ausführung weist die Einstellvorrichtung einen Klemmflansch auf, welcher mittels Flanschschrauben an einem Flanschsitz des Getriebegehäuses befestigt ist und in seiner befestigten Anordnung am Flanschsitz des Getriebegehäuses die Verstellmutter axial verspannt und/oder festklemmt, so dass die Gewindeanordnung, insbesondere das Innengewinde des Getriebegehäuse und das Außengewinde der Verstellmutter gegen selbsttätiges Lösen gesichert ist.

Erfindungsgemäß weist der Klemmflansch eine kreiszylindrische Innenumfangswand auf, die mit einer korrespondierenden kreiszylindrischen Außenumfangswand an der Verstellmutter zusammenwirkt, derart, dass die Verbindung von Innenumfangswand und Außenumfangswand eine erste Passung bildet, welche die Verstellmutter bezüglich dem Klemmflansch zentriert, wobei der Klemmflansch außerdem eine kreiszylindrische Außenumfangswand aufweist, die mit einer korrespondierenden kreiszylindrischen Innenumfangswand an dem Getriebegehäuse zusammenwirkt, derart, dass die Verbindung von Außenumfangswand und Innenumfangswand eine zweite Passung bildet, welche den Klemmflansch bezüglich des Getriebegehäuses zentriert.

In der grundlegenden Ausführung kann die Verstellmutter optional eine Betätigungskontur aufweisen, die ausgebildet ist zum manuellen Drehen der Verstellmutter im Innengewinde des Getriebegehäuses mittels der Hand einer Person oder zum Drehen der Verstellmutter im Innengewinde des Getriebegehäuses mittels eines Handwerkzeugs, insbesondere eines Flanschschlüssels.

In einer speziellen, ersten alternativen Ausführungsform kann zur Bildung der Einstellvorrichtung die erste Lageranordnung ein Axialkräfte abstützendes erstes Wälzlager aufweisen, das einen mit der Antriebswelle fest verbundenen ersten Innenring und einen im Getriebegehäuse axial verstellbar gelagerten ersten Außenring aufweist, wobei die axiale Position des ersten Außenrings des ersten Wälzlagers mittels einer ersten Gewindeanordnung einstellbar ist, die ein im Getriebegehäuse festgelegtes erstes Innengewinde und ein mit dem ersten Innengewinde zusammenwirkendes erstes Außengewinde aufweist, das an einer ersten Verstellmutter ausgebildet ist, an welcher der erste Außenring gelagert ist.

In der ersten alternativen Ausführungsform kann die erste Verstellmutter einen ersten Lagerringsitz aufweisen, in dem der erste Außenring des ersten Wälzlagers axial fixiert ist und die erste Verstellmutter eine erste Außenmantelwand aufweisen, an der das mit dem ersten Innengewinde des Getriebegehäuses zusammenwirkende erste Außengewinde ausgebildet ist.

In der ersten alternativen Ausführungsform kann die erste Gewindeanordnung, insbesondere das erste Innengewinde des Getriebegehäuses und das erste Außengewinde der ersten Verstellmutter optional als ein Feingewinde ausgebildet sein, insbesondere als ein Feingewinde mit der Steigung 1.0, 0.75 oder 0.5 ausgebildet sein.

In der ersten alternativen Ausführungsform kann die Einstellvorrichtung einen ersten Klemmflansch aufweisen, welcher mittels erster Flanschschrauben an einem ersten Flanschsitz des Getriebegehäuses befestigt ist und in seiner befestigten Anordnung am ersten Flanschsitz des Getriebegehäuses die erste Verstellmutter axial verspannt und/oder festklemmt, so dass die erste Gewindeanordnung, insbesondere das erste Innengewinde des Getriebegehäuse und das erste Außengewinde der ersten Verstellmutter gegen selbsttätiges Lösen gesichert ist.

In der ersten alternativen Ausführungsform kann der erste Klemmflansch eine kreiszylindrische Innenumfangswand aufweisen, die mit einer korrespondierenden kreiszylindrischen Außenumfangswand an der ersten Verstellmutter zusammenwirkt, derart, dass die Verbindung von Innenumfangswand und Außenumfangswand eine erste Passung bildet, welche die erste Verstellmutter bezüglich dem ersten Klemmflansch zentriert, wobei der erste Klemmflansch außerdem eine kreiszylindrische Außenumfangswand aufweist, die mit einer korrespondierenden kreiszylindrischen Innenumfangswand an dem Getriebegehäuse zusammenwirkt, derart, dass die Verbindung von Außenumfangswand und Innenumfangswand eine zweite Passung bildet, welche den ersten Klemmflansch bezüglich des Getriebegehäuses zentriert.

In der ersten alternativen Ausführungsform kann die erste Verstellmutter optional eine erste Betätigungskontur aufweisen, die ausgebildet ist zum manuellen Drehen der ersten Verstellmutter im ersten Innengewinde des Getriebegehäuses mittels der Hand einer Person oder zum Drehen der ersten Verstellmutter im ersten Innengewinde des Getriebegehäuses mittels eines Handwerkzeugs, insbesondere eines Flanschschlüssels.

In einer speziellen, zweiten alternativen Ausführungsform kann zur Bildung der Einstellvorrichtung die zweite Lageranordnung ein Axialkräfte abstützendes zweites Wälzlager aufweisen, das einen mit der Abtriebswelle fest verbundenen zweiten Innenring und einen im Getriebegehäuse axial verstellbar gelagerten zweiten Außenring aufweist, wobei die axiale Position des zweiten Außenrings des zweiten Wälzlagers mittels einer zweiten Gewindeanordnung einstellbar ist, die ein im Getriebegehäuse festgelegtes zweites Innengewinde und ein mit dem zweiten Innengewinde zusammenwirkendes zweites Außengewinde aufweist, das an einer zweiten Verstellmutter ausgebildet ist, an welcher der zweite Außenring gelagert ist.

In der zweiten alternativen Ausführungsform kann die zweite Verstellmutter einen zweiten Lagerringsitz aufweisen, in dem der zweite Außenring des zweiten Wälzlagers axial fixiert ist und die zweite Verstellmutter eine zweite Außenmantelwand aufweisen, an der das mit dem zweiten Innengewinde des Getriebegehäuses zusammenwirkende zweite Außengewinde ausgebildet ist.

In der zweiten alternativen Ausführungsform kann die zweite Gewindeanordnung, insbesondere das zweite Innengewinde des Getriebegehäuses und das zweite Außengewinde der zweiten Verstellmutter optional als ein Feingewinde ausgebildet sein, insbesondere als ein Feingewinde mit der Steigung 1.0, 0.75 oder 0.5 ausgebildet sein.

In der zweiten alternativen Ausführungsform kann die Einstellvorrichtung einen zweiten Klemmflansch aufweisen, welcher mittels zweiter Flanschschrauben an einem zweiten Flanschsitz des Getriebegehäuses befestigt ist und in seiner befestigten Anordnung am zweiten Flanschsitz des Getriebegehäuses die zweite Verstellmutter axial verspannt und/oder festklemmt, so dass die zweite Gewindeanordnung, insbesondere das zweite Innengewinde des Getriebegehäuse und das zweite Außengewinde der zweiten Verstellmutter gegen selbsttätiges Lösen gesichert ist.

In der zweiten alternativen Ausführungsform kann der zweite Klemmflansch eine kreiszylindrische Innenumfangswand aufweisen, die mit einer korrespondierenden kreiszylindrischen Außenumfangswand an der zweiten Verstellmutter zusammenwirkt, derart, dass die Verbindung von Innenumfangswand und Außenumfangswand eine erste Passung bildet, welche die zweite Verstellmutter bezüglich dem zweiten Klemmflansch zentriert, wobei der zweite Klemmflansch außerdem eine kreiszylindrische Außenumfangswand aufweist, die mit einer korrespondierenden kreiszylindrischen Innenumfangswand an dem Getriebegehäuse zusammenwirkt, derart, dass die Verbindung von Außenumfangswand und Innenumfangswand eine zweite Passung bildet, welche den zweiten Klemmflansch bezüglich des Getriebegehäuses zentriert.

In der zweiten alternativen Ausführungsform kann die zweite Verstellmutter optional eine zweite Betätigungskontur aufweisen, die ausgebildet ist zum manuellen Drehen der zweiten Verstellmutter im zweiten Innengewinde des Getriebegehäuses mittels der Hand einer Person oder zum Drehen der zweiten Verstellmutter im zweiten Innengewinde des Getriebegehäuses mittels eines Handwerkzeugs, insbesondere eines Flanschschlüssels.

Die erste alternative Ausführungsform kann mit der zweiten alternativen Ausführungsform kombiniert sein, auch in voneinander abweichenden speziellen Ausführungskombinationen.

In einer dritten Ausführungsform kann die Verstellmutter eine Stirnringwand aufweisen, an der sich der Außenring mit seiner ersten Stirnseite abstützt, wobei eine der ersten Stirnseite gegenüberliegende zweite Stirnseite des Außenrings einer Schulter am Getriebegehäuse zugewandt ist, und wobei in einem zwischen der zweiten Stirnseite des Außenrings und der Schulter ausgebildeten Ringspalt eine Spannfedereinrichtung eingefügt ist, welche ausgebildet ist, den Außenring axial gegen die Stirnringwand der Verstellmutter zu spannen.

Das betrachtete Kegelrad in dieser dritten Ausführungsform kann auch mit einer Fest-Los-Lagerung gelagert sein. Dadurch kann die Position des Kegelrads am Festlager eingestellt werden. Bei dieser beispielhaften Lösung wird das Festlager am Außenring verschoben anstatt an dem Innenring, da hier der Durchmesser größer ist und damit eine Spannfeder mit höherer Kraft ausgewählt werden kann. Der radiale Bauraum der Spannfeder ist im Allgemeinen durch den Außendurchmesser des Festlagers und nach innen durch den Durchmesser des Kegelrades eingeschränkt. Der axiale Bauraum ist im Allgemeinen durch den Abstand von Festlager und Loslager begrenzt.

Der geringe Unterschied von Innen- zu Außendurchmesser im verfügbaren Bauraum macht die Auswahl einer geeigneten Tellerfeder allerding schwierig. Durch die höhere Anzahl an Bauteilen kann eine einzelne Tellerfeder die auftretenden Toleranzen definitiv nicht ausgleichen. Auf der anderen Seite steht oft relativ viel axialer Bauraum zur Verfügung. Aus diesen Gründen kann erfindungsgemäß der Einsatz beispielsweise einer Schraubenfeder, d.h. einer Federwendel sinnvoll sein. In der vorliegenden Lösung kann auch wenigstens eine Wellenfeder eingesetzt werden, insbesondere da diese bei gleicher Lasthöhe eine höhere Vorspannkraft erzeugt, als eine Schraubenfeder.

Die Zustellung des Kegelrades selbst erfolgt über einen Ring mit Außengewinde. Die Steigung des Gewindes kann mit beispielsweise 1 mm sehr klein gewählt werden, um eine möglichst feine Einstellung des Flankenspiels zu Ermöglichen.

In der dritten Ausführungsform kann die Spannfedereinrichtung von wenigstens einer Wellenfeder, insbesondere einem Wellenfederpaket umfassend mehrere axial übereinander angeordneter Wellenfedern, gebildet werden.

Alternativ zu einer Wellenfeder kann die Spannfedereinrichtung von wenigstens einer Federwendel oder wenigstens einer Tellerfeder gebildet werden.

In der dritten Ausführungsform kann die Verstellmutter eine Außenmantelwand aufweisen, an der das mit dem Innengewinde des Getriebegehäuses zusammenwirkende Außengewinde ausgebildet ist.

Auch in der dritten Ausführungsform kann die Gewindeanordnung, insbesondere das Innengewinde des Getriebegehäuses und das Außengewinde der Verstellmutter optional als ein Feingewinde ausgebildet sein, insbesondere als ein Feingewinde mit der Steigung 1.0, 0.75 oder 0.5 ausgebildet sein.

In der dritten Ausführungsform kann zur Bildung der Einstellvorrichtung die erste Lageranordnung ein Axialkräfte abstützendes erstes Wälzlager aufweisen, das einen mit der Antriebswelle fest verbundenen ersten Innenring und einen im Getriebegehäuse axial verstellbar gelagerten ersten Außenring aufweist, wobei die axiale Position des ersten Außenrings des ersten Wälzlagers mittels einer ersten Gewindeanordnung einstellbar ist, die ein im Getriebegehäuse festgelegtes erstes Innengewinde und ein mit dem ersten Innengewinde zusammenwirkendes erstes Außengewinde aufweist, das an einer ersten Verstellmutter ausgebildet ist, die eine erste Stirnringwand aufweist, an der sich der erste Außenring mit seiner ersten Stirnseite abstützt und eine der ersten Stirnseite gegenüberliegende zweite Stirnseite des ersten Außenrings einer Schulter am Getriebegehäuse zugewandt ist, wobei in einem zwischen der zweiten Stirnseite des ersten Außenrings und der Schulter ausgebildeten ersten Ringspalt eine erste Spannfedereinrichtung eingefügt ist, welche ausgebildet ist, den ersten Außenring axial gegen die Stirnringwand der ersten Verstellmutter zu spannen.

Die erste Spannfedereinrichtung kann beispielsweise von wenigstens einer Wellenfeder, insbesondere einem Wellenfederpaket umfassend mehrere axial übereinander angeordneter Wellenfedern, gebildet werden.

Die erste Spannfedereinrichtung kann aber auch von wenigstens einer Federwendel gebildet werden.

Die erste Verstellmutter kann eine Außenmantelwand aufweisen, an der das mit dem ersten Innengewinde des Getriebegehäuses zusammenwirkende erste Außengewinde ausgebildet ist.

Die erste Gewindeanordnung, insbesondere das erste Innengewinde des Getriebegehäuses und das erste Außengewinde der ersten Verstellmutter kann optional als ein Feingewinde ausgebildet sein, insbesondere als ein Feingewinde mit der Steigung 1.0, 0.75 oder 0.5 ausgebildet sein.

In der dritten Ausführungsform kann alternativ oder ergänzend zu der ersten Lageranordnung zur Bildung der Einstellvorrichtung auch die zweite Lageranordnung ein Axialkräfte abstützendes zweites Wälzlager aufweisen, das einen mit der Abtriebswelle fest verbundenen zweiten Innenring und einen im Getriebegehäuse axial verstellbar gelagerten zweiten Außenring aufweist, wobei die axiale Position des zweiten Außenrings des zweiten Wälzlagers mittels einer zweiten Gewindeanordnung einstellbar ist, die ein im Getriebegehäuse festgelegtes zweites Innengewinde und ein mit dem zweiten Innengewinde zusammenwirkendes zweites Außengewinde aufweist, das an einer zweiten Verstellmutter ausgebildet ist, die eine zweite Stirnringwand aufweist, an der sich der zweite Außenring mit seiner ersten Stirnseite abstützt und eine der ersten Stirnseite gegenüberliegende zweite Stirnseite des zweiten Außenrings einer Schulter am Getriebegehäuse zugewandt ist, wobei in einem zwischen der zweiten Stirnseite des zweiten Außenrings und der Schulter ausgebildeten zweiten Ringspalt eine zweite Spannfedereinrichtung eingefügt ist, welche ausgebildet ist, den zweiten Außenring axial gegen die Stirnringwand der zweiten Verstellmutter zu spannen.

Die zweite Spannfedereinrichtung kann beispielsweise von wenigstens einer Wellenfeder, insbesondere einem Wellenfederpaket umfassend mehrere axial übereinander angeordneter Wellenfedern, gebildet werden.

Die zweite Spannfedereinrichtung kann aber auch von wenigstens einer Federwendel gebildet werden.

Die zweite Verstellmutter kann eine Außenmantelwand aufweisen, an der das mit dem zweiten Innengewinde des Getriebegehäuses zusammenwirkende zweite Außengewinde ausgebildet ist.

Die zweite Gewindeanordnung, insbesondere das zweite Innengewinde des Getriebegehäuses und das zweite Außengewinde der zweiten Verstellmutter kann optional als ein Feingewinde ausgebildet sein, insbesondere als ein Feingewinde mit der Steigung 1.0, 0.75 oder 0.5 ausgebildet sein.

In allen beschriebenen Ausführungsvarianten können das Wälzlager, insbesondere das erste Wälzlager und/oder das zweite Wälzlager jeweils als ein zweireihiges Schrägkugellager, insbesondere als ein zweireihiges Schrägkugellager in O-Anordnung ausgebildet sein.

In allen beschriebenen Ausführungsvarianten können das Wälzlager, insbesondere das erste Wälzlager und/oder das zweite Wälzlager jeweils als ein Festlager einer Fest-Los-Lageranordnung der ersten Lageranordnung und/oder der zweiten Lageranordnung ausgebildet sein.

Konkrete Ausführungsbeispiele der Erfindung sind in der nachfolgenden Figurenbeschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder auch in anderen Kombinationen der Merkmale betrachtet, allgemeine Merkmale der Erfindung darstellen.

Die Figuren zeigen:
- Fig. 1: eine perspektivische Darstellung eines beispielhaften Roboterarms mit innenliegenden Getrieben, die ausgebildet sind zum Bewegen der Gelenke des Roboterarms,
- Fig. 2: eine Explosionsdarstellung einer ersten Ausführungsform eines erfindungsgemäßen Getriebes,
- Fig. 3: eine Darstellung der ersten Ausführungsform des Getriebes gemäß Fig. 2 im Zusammenbau, und
- Fig. 4: eine Darstellung einer zweiten Ausführungsform eines erfindungsgemäßen Getriebes.

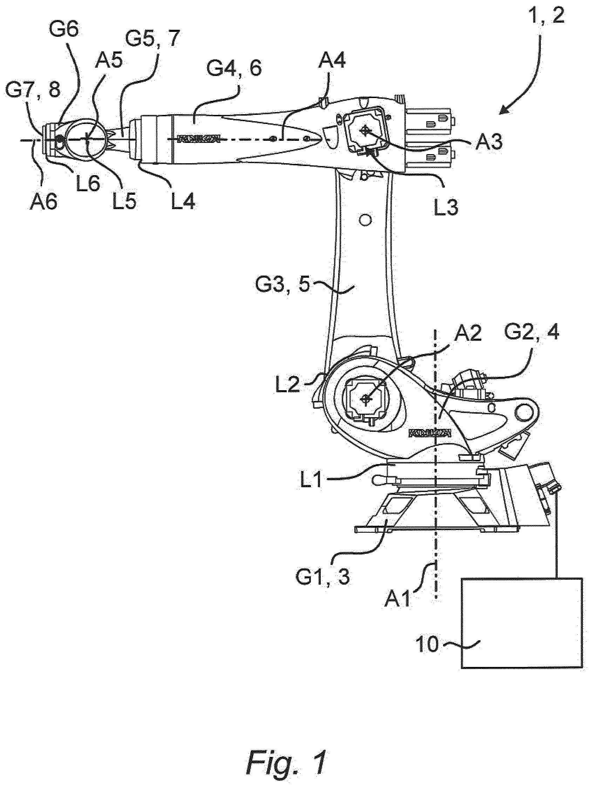

Die Fig. 1 zeigt einen Industrieroboter 1, der einen Roboterarm 2 und eine Robotersteuerung 10 aufweist. Der Roboterarm 2 umfasst im Falle des vorliegenden Ausführungsbeispiels mehrere, nacheinander angeordnete, und mittels Gelenke L1 bis L6 drehbar miteinander verbundene Glieder G1 bis G7.

Der Industrieroboter 1 weist die Robotersteuerung 10 auf, die ausgebildet ist, ein Roboterprogramm auszuführen, sowie den Roboterarm 2 mit mehreren Gliedern G1-G7 auf, die über Gelenke L1-L6 verbunden sind, die zum automatischen gegeneinander Verstellen der Glieder G1-G7 gemäß dem Roboterprogramm ausgebildet sind, wobei eines der mehreren Glieder G1-G7 ein Endglied (G7) des Roboterarms 2 bildet, das einen Werkzeugflansch 8 aufweist.

Die Robotersteuerung 10 des Industrieroboters 1 ist ausgebildet bzw. eingerichtet, ein Roboterprogramm auszuführen, durch welches die Gelenke L1 bis L6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Antrieben verbunden, die ausgebildet sind, die Gelenke L1 bis L6 des Industrieroboters 1 zu verstellen.

Bei den Gliedern G1 bis G7 handelt es sich im Falle des vorliegenden Ausführungsbeispiels um ein Robotergrundgestell 3 und ein relativ zum Robotergrundgestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Werkzeugflansch 8 ausgeführten Befestigungsvorrichtung zum Befestigen eines Werkzeugs. Die Schwinge 5 ist am unteren Ende, d.h. an dem Gelenk L2 der Schwinge 5, das auch als Schwingenlagerkopf bezeichnet werden kann, auf dem Karussell 4 um eine vorzugsweise horizontale Drehachse A2 schwenkbar gelagert.

Am oberen Ende der Schwinge 5 ist an dem ersten Gelenk L3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke L1 bis L6 sind durch jeweils einen der elektrischen Antriebe über die Robotersteuerung 10 programmgesteuert antreibbar.

Der Roboterarm 2 weist demgemäß mehrere Glieder G1 bis G7 und die Glieder G1 bis G7 gegeneinander verstellbar verbindende Gelenke L1 bis L6 auf, wobei eines der Glieder G1 ein Robotergrundgestell 3 bildet.

Der Roboterarm 2 weist im Falle des vorliegenden Ausführungsbeispiels wenigstens ein wie im Folgenden beschriebenes Getriebe auf.

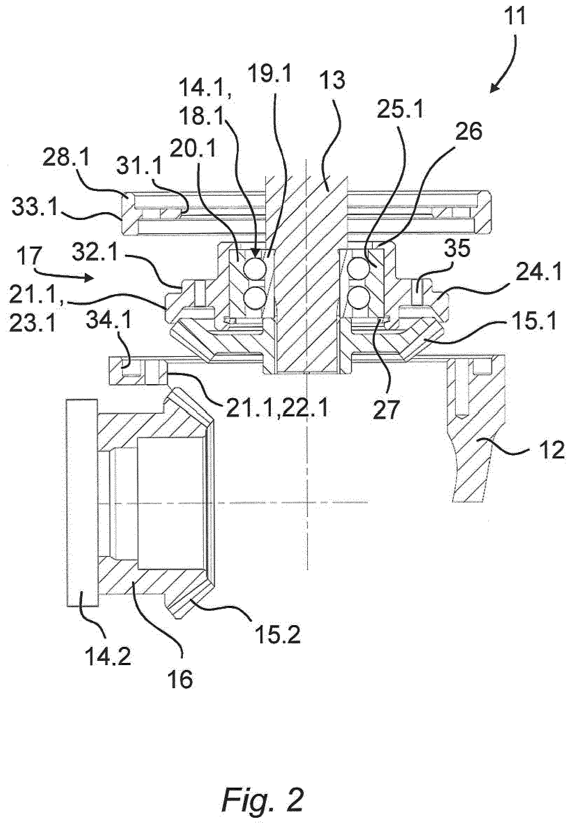

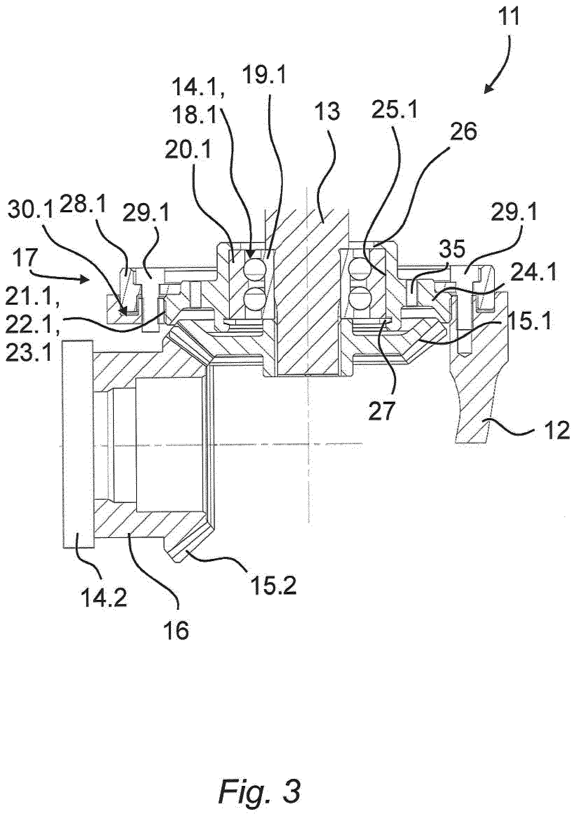

Die Fig. 2 und Fig. 3 zeigen eine erste Ausführungsform eines beispielhaften Getriebes 11.

Das Getriebe 11 weist ein Getriebegehäuse 12 auf. In dem Getriebegehäuse 12 ist eine Antriebswelle 13 mittels einer ersten Lageranordnung 14.1 drehbar gelagert. Die erste Lageranordnung 14.1 weist ein erstes Kegelrad 15.1 auf. In dem Getriebegehäuse 12 ist außerdem eine Abtriebswelle 16 mittels einer zweiten Lageranordnung 14.2 drehbar gelagert. Die zweite Lageranordnung 14.2 weist ein zweites Kegelrad 15.2 auf, das mit dem ersten Kegelrad 15.1 kämmend in Eingriff ist.

Das Getriebe 11 weist außerdem wenigstens eine erfindungsgemäße Einstellvorrichtung 17 auf.

Wie in Fig. 2 und Fig. 3 dargestellt kann lediglich die erste Lageranordnung 14.1 des ersten Kegelrades 15.1 mit einer erfindungsgemäßen Einstellvorrichtung 17 versehen sein. Alternativ kann statt der ersten Lageranordnung 14.1 mit dem ersten Kegelrad 15.1 die zweite Lageranordnung 14.2 mit dem zweiten Kegelrad 15.2 die erfindungsgemäße Einstellvorrichtung 17 aufweisen. Gegebenenfalls kann es auch sinnvoll sein, wenn sowohl die erste Lageranordnung 14.1 mit dem ersten Kegelrad 15.1 als auch die zweite Lageranordnung 14.2 mit dem zweiten Kegelrad 15.2 jeweils eine eigene erfindungsgemäße Einstellvorrichtung 17 aufweisen. Im Folgenden wird die erfindungsgemäße Einstellvorrichtung 17 jedoch lediglich anhand der ersten Lageranordnung 14.1 mit dem ersten Kegelrad 15.1 gezeigt und beschrieben. Das zur ersten Lageranordnung 14.1 Beschriebene kann sinngemäß aber auch in der Verwendung an der zweiten Lageranordnung 14.2 gelten. Die erfindungsgemäße Einstellvorrichtung 17 kann demgemäß wahlweise an der Antriebswelle 13 und/oder der Abtriebswelle 16 ausgebildet sein.

Die erfindungsgemäße Einstellvorrichtung 17 dient zum Einstellen des Zahnflankenspiels zwischen dem ersten Kegelrad 15.1 und dem zweiten Kegelrad 15.2 durch axiales Verstellen des ersten Kegelrades 15.1. Die Einstellvorrichtung 17 umfasst ein an der ersten Lageranordnung 14.1 ausgebildetes erstes Wälzlager 18.1 welches ausgebildet ist zumindest die Axialkräfte abzustützen. Das erste Wälzlager 18.1 weist einen mit der Antriebswelle 13 fest verbundenen ersten Innenring 19.1 und einen im Getriebegehäuse 12 axial verstellbar gelagerten ersten Außenring 20.1 auf. Die axiale Position des ersten Außenrings 20.1 des ersten Wälzlagers 18.1 ist mittels einer ersten Gewindeanordnung 21.1 einstellbar, die ein im Getriebegehäuse 12 festgelegtes erstes Innengewinde 22.1 und ein mit dem ersten Innengewinde 22.1 zusammenwirkendes erstes Außengewinde 23.1 aufweist, das an einer ersten Verstellmutter 24.1 ausgebildet ist, an welcher der erste Außenring 20.1 gelagert ist.

Die erste Verstellmutter 24.1 weist einen ersten Lagerringsitz 25.1 auf, in dem der erste Außenring 20.1 des ersten Wälzlagers 18.1 axial fixiert ist und die erste Verstellmutter 24.1 eine erste Außenmantelwand aufweist, an der das mit dem ersten Innengewinde 22.1 des Getriebegehäuses 12 zusammenwirkende erste Außengewinde 23.1 ausgebildet ist. Der erste Außenring 20.1 des ersten Wälzlagers 18.1 kann mittels eines Anlaufbundes 26 und eines Federringes 27 in dem Lagerringsitz 25.1 axial fixiert sein.

Die erste Gewindeanordnung 21.1, insbesondere das erste Innengewinde 22.1 des Getriebegehäuses 12 und das erste Außengewinde 23.1 der ersten Verstellmutter 24.1 kann als ein Feingewinde ausgebildet sein, insbesondere als ein Feingewinde mit der Steigung 1.0, 0.75 oder 0.5.

Die Einstellvorrichtung 17 umfasst im Falle des vorliegenden Ausführungsbeispiels einen ersten Klemmflansch 28.1, welcher mittels erster Flanschschrauben 29.1 an einem ersten Flanschsitz 30.1 des Getriebegehäuses 12 befestigt ist. In seiner befestigten Anordnung am ersten Flanschsitz 30.1 ist die erste Verstellmutter 24.1 bezüglich des Getriebegehäuses 12 axial verspannt und/oder festklemmt, so dass die erste Gewindeanordnung 21.1, insbesondere das erste Innengewinde 22.1 des Getriebegehäuse 12 und das erste Außengewinde 23.1 der ersten Verstellmutter 24.1 gegen selbsttätiges Lösen gesichert ist.

Der erste Klemmflansch 28.1 weist im Falle des vorliegenden Ausführungsbeispiels eine kreiszylindrische Innenumfangswand 31.1 auf, die mit einer korrespondierenden kreiszylindrischen Außenumfangswand 32.1 an der ersten Verstellmutter 24.1 zusammenwirkt, derart, dass die Verbindung von Innenumfangswand 31.1 und Außenumfangswand 32.1 eine erste Passung bildet, welche die erste Verstellmutter 24.1 bezüglich dem ersten Klemmflansch 28.1 zentriert. Der erste Klemmflansch 28.1 weist im Falle des vorliegenden Ausführungsbeispiels außerdem eine kreiszylindrische Außenumfangswand 33.1 auf, die mit einer korrespondierenden kreiszylindrischen Innenumfangswand 34.1 an dem Getriebegehäuse 12 zusammenwirkt, derart, dass die Verbindung von Außenumfangswand 33.1 und Innenumfangswand 34.1 eine zweite Passung bildet, welche den ersten Klemmflansch 28.1 bezüglich des Getriebegehäuses 12 zentriert.

Die erste Verstellmutter 24.1 weist ergänzend wenigstens eine erste Betätigungskontur 35 auf, die ausgebildet ist zum manuellen Drehen der ersten Verstellmutter 24.1 im ersten Innengewinde 22.1 des Getriebegehäuses 12 beispielsweise mittels eines Handwerkzeugs, insbesondere eines Flanschschlüssels. Insoweit kann die wenigstens eine erste Betätigungskontur 35 beispielsweise von zwei gegenüberliegenden Stirnlöchern der ersten Verstellmutter 24.1 gebildet werden, in die korrespondierenden Stifte des Flanschschlüssels eingesteckt werden können. Der Flanschschlüssel kann auch als Stirnlochschlüssel bezeichnet werden.

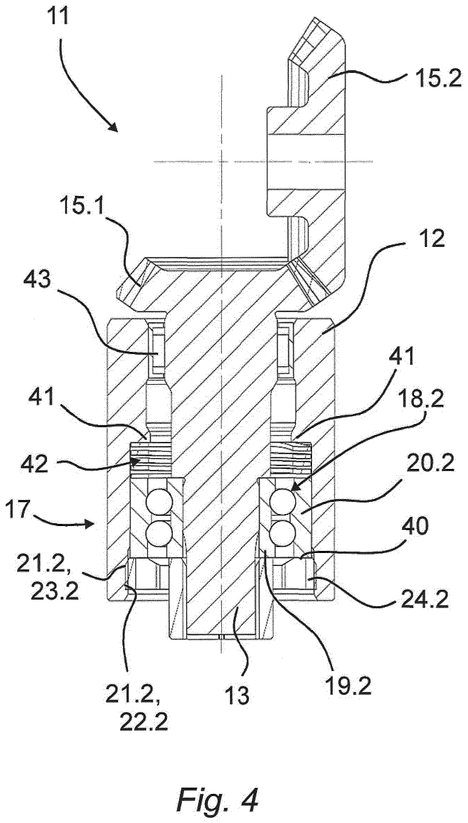

Die Fig. 4 zeigt eine zweite Ausführungsform eines beispielhaften Getriebes 11, bzw. eine zweite grundlegende Ausführungsvariante einer erfindungsgemäßen Einstellvorrichtung 17. Dieses Getriebe 11 umfasst das Getriebegehäuse 12, sowie ein erstes Kegelrad 15.1, das mit dem zweiten Kegelrad 15.2 kämmend in Eingriff ist.

Das Wälzlager 18.2 weist einen mit der Antriebswelle 13 fest verbundenen Innenring 19.2 und einen im Getriebegehäuse 12 axial verstellbar gelagerten Außenring 20.2 auf. Die axiale Position des Außenrings 20.2 des Wälzlagers 18.2 ist mittels einer ersten Gewindeanordnung 21.2 einstellbar, die ein im Getriebegehäuse 12 festgelegtes Innengewinde 22.2 und ein mit dem Innengewinde 22.2 zusammenwirkendes Außengewinde 23.2 aufweist, das an einer Verstellmutter 24.2 ausgebildet ist, an welcher der Außenring 20.2 gelagert ist.

In der zweiten Ausführungsvariante weist die Verstellmutter 24.2 eine Stirnringwand 40 auf, an der sich der Außenring 20.2 des Wälzlagers 18.2 mit seiner ersten Stirnseite abstützt und eine der ersten Stirnseite gegenüberliegende zweite Stirnseite des Außenrings 20.2 einer Schulter 41 am Getriebegehäuse 12 zugewandt ist, wobei in einem zwischen der zweiten Stirnseite des Außenrings 20.2 und der Schulter 41 ausgebildeten Ringspalt eine Spannfedereinrichtung 42 eingefügt ist, welche ausgebildet ist, den Außenring 20.2 axial gegen die Stirnringwand 40 der Verstellmutter 24.2 zu spannen.

Im Falle des vorliegenden Ausführungsbeispiels wird die Spannfedereinrichtung 42 von einer Wellenfeder gebildet. Statt einer Wellenfeder kann die Spannfedereinrichtung 42 alternativ jedoch auch als wenigstens eine Federwendel oder wenigstens eine Tellerfeder bzw. ein Tellerfederpaket gebildet werden.

Die Verstellmutter 24.2 weist eine Außenmantelwand auf, an der das mit dem Innengewinde 22.2 des Getriebegehäuses 12 zusammenwirkende Außengewinde 23.2 ausgebildet ist.

Die Gewindeanordnung 21.2, insbesondere das Innengewinde 22.2 des Getriebegehäuses 12 und das Außengewinde 23.2 der Verstellmutter 24.2 sind im Falle des vorliegenden Ausführungsbeispiels als ein Feingewinde ausgebildet, insbesondere als ein Feingewinde mit der Steigung 1.0, 0.75 oder 0.5.

In allen Ausführungsvarianten können die jeweiligen Wälzlager jeweils als ein zweireihiges Schrägkugellager, insbesondere als ein zweireihiges Schrägkugellager in O-Anordnung ausgebildet sein.

In allen Ausführungsvarianten können die jeweiligen Wälzlager jeweils als ein Festlager einer Fest-Los-Lageranordnung, wie insbesondere in Fig. 2 bis Fig. 4 dargestellt ist, ausgebildet sein. So kann das jeweilige Wälzlager, welches durch die jeweilige erfindungsgemäße Verstellmutter abgestützt ist, das Festlager bilden und dabei die Fest-Los-Lageranordnung durch ein separates Loslager 43 ergänzt sein.

## Patentansprüche

1. Getriebe, aufweisend ein Getriebegehäuse (12), eine im Getriebegehäuse (12) mittels einer ersten Lageranordnung (14.1) drehbar gelagerte Antriebswelle (13), die ein erstes Kegelrad (15.1) aufweist und eine im Getriebegehäuse (12) mittels einer zweiten Lageranordnung (14.2) drehbar gelagerte Abtriebswelle (16), die ein zweites Kegelrad (15.2) aufweist, das mit dem ersten Kegelrad (15.1) kämmend in Eingriff ist, sowie eine Einstellvorrichtung (17) zum Einstellen des Zahnflankenspiels zwischen dem ersten Kegelrad (15.1) und dem zweiten Kegelrad (15.2) durch axiales Verstellen des ersten Kegelrades (15.1) und/oder des zweiten Kegelrades (15.2), wobei die Einstellvorrichtung (17) ein Wälzlager (18.1, 18.2) umfasst, das einen mit der Antriebswelle (13) oder der Abtriebswelle (16) fest verbundenen Innenring (19.1, 19.2) und einen im Getriebegehäuse (12) axial verstellbar gelagerten Außenring (20.1, 20.2) aufweist, wobei die axiale Position des Außenrings (20.1, 20.2) des Wälzlagers (18.1, 18.2) mittels einer Gewindeanordnung (21.1, 21.2) einstellbar ist, die ein im Getriebegehäuse (12) festgelegtes Innengewinde (22.1, 22.2) und ein mit dem Innengewinde (22.1, 22.2) zusammenwirkendes Außengewinde (23.1, 23.2) aufweist, das an einer Verstellmutter (24.1, 24.2) der Einstellvorrichtung (17) ausgebildet ist, an der sich der Außenring (20.1, 20.2) abstützt, wobei die Einstellvorrichtung (17) einen Klemmflansch (28.1) aufweist, welcher mittels Flanschschrauben (29.1) an einem Flanschsitz (30.1) des Getriebegehäuses (12) befestigt ist und in seiner befestigten Anordnung am Flanschsitz (30.1) des Getriebegehäuses (12) die Verstellmutter (24.1, 24.2) axial verspannt und/oder festklemmt, so dass die Gewindeanordnung (21.1, 21.2) gegen selbsttätiges Lösen gesichert ist, **dadurch gekennzeichnet, dass** der Klemmflansch (28.1) eine kreiszylindrische Innenumfangswand (31.1) aufweist, die mit einer korrespondierenden kreiszylindrischen Außenumfangswand (32.1) an der Verstellmutter (24.1, 24.2) zusammenwirkt, derart, dass die Verbindung von Innenumfangswand (31.1) und Außenumfangswand (32.2) eine erste Passung bildet, welche die Verstellmutter (24.1, 24.2) bezüglich dem Klemmflansch (28.1) zentriert, und der Klemmflansch (28.1) eine kreiszylindrische Außenumfangswand (33.1) aufweist, die mit einer korrespondierenden kreiszylindrischen Innenumfangswand (34.1) an dem Getriebegehäuse (12) zusammenwirkt, derart, dass die Verbindung von Außenumfangswand (33.1) und Innenumfangswand (34.1) eine zweite Passung bildet, welche den Klemmflansch (28.1) bezüglich des Getriebegehäuses (12) zentriert.

2. Getriebe nach Anspruch 1, **dadurch gekennzeichnet, dass** die Verstellmutter (24.1, 24.2) einen Lagerringsitz (25.1) aufweist, in dem der Außenring (20.1, 20.2) des Wälzlagers (18.1, 18.2) axial fixiert ist und die Verstellmutter (24.1, 24.2) eine Außenmantelwand aufweist, an der das mit dem Innengewinde (22.1, 22.2) des Getriebegehäuses (12) zusammenwirkende Außengewinde (23.1, 23.2) ausgebildet ist.

3. Getriebe nach Anspruch 1 oder 2, **dadurch gekennzeichnet, dass** die Gewindeanordnung (21.1, 21.2) als ein Feingewinde ausgebildet sind, insbesondere als ein Feingewinde mit der Steigung 1.0, 0.75 oder 0.5 ausgebildet sind.

4. Getriebe nach einem der Ansprüche 1 bis 3, **dadurch gekennzeichnet, dass** die Verstellmutter (24.1, 24.2) eine Betätigungskontur (35) aufweist, die ausgebildet ist zum manuellen Drehen der Verstellmutter (24.1, 24.2) im Innengewinde (22.1, 22.2) des Getriebegehäuses (12) mittels der Hand einer Person oder zum Drehen der Verstellmutter (24.1, 24.2) im Innengewinde (22.1, 22.2) des Getriebegehäuses (12) mittels eines Handwerkzeugs, insbesondere eines Flanschschlüssels.

5. Getriebe nach einem der Ansprüche 1 bis 4, **dadurch gekennzeichnet, dass** zur Bildung der Einstellvorrichtung (17) die erste Lageranordnung ein Axialkräfte abstützendes erstes Wälzlager aufweist, das einen mit der Antriebswelle fest verbundenen ersten Innenring und einen im Getriebegehäuse axial verstellbar gelagerten ersten Außenring (20.1, 20.2) aufweist, wobei die axiale Position des ersten Außenrings (20.1, 20.2) des ersten Wälzlagers mittels einer ersten Gewindeanordnung einstellbar ist, die ein im Getriebegehäuse festgelegtes erstes Innengewinde und ein mit dem ersten Innengewinde zusammenwirkendes erstes Außengewinde aufweist, das an einer ersten Verstellmutter (24.1, 24.2) ausgebildet ist, an welcher der erste Außenring (20.1, 20.2) gelagert ist.

6. Getriebe nach Anspruch 5, **dadurch gekennzeichnet, dass** die erste Verstellmutter (24.1, 24.2) einen ersten Lagerringsitz (25.1) aufweist, in dem der erste Außenring (20.1) des ersten Wälzlagers (18.1) axial fixiert ist und die erste Verstellmutter (24.1) eine erste Außenmantelwand aufweist, an der das mit dem ersten Innengewinde (22.1) des Getriebegehäuses (12) zusammenwirkende erste Außengewinde (23.1) ausgebildet ist.

7. Getriebe nach Anspruch 5 oder 6, **dadurch gekennzeichnet, dass** die erste Gewindeanordnung (21.1) als ein Feingewinde mit der Steigung 1.0, 0.75 oder 0.5 ausgebildet ist.

8. Getriebe nach einem der Ansprüche 5 bis 7, **dadurch gekennzeichnet, dass** die Einstellvorrichtung (17) einen ersten Klemmflansch (28.1) aufweist, welcher mittels erster Flanschschrauben (29.1) an einem ersten Flanschsitz (30.1) des Getriebegehäuses (12) befestigt ist und in seiner befestigten Anordnung am ersten Flanschsitz (30.1) des Getriebegehäuses (12) die erste Verstellmutter (24.1) axial verspannt und/oder festklemmt, so dass das erste Innengewinde (22.1) des Getriebegehäuse (12) und das erste Außengewinde (32.1) der ersten Verstellmutter (24.1) gegen selbsttätiges Lösen gesichert ist.

9. Getriebe nach einem der Ansprüche 5 bis 8, **dadurch gekennzeichnet, dass** der erste Klemmflansch (28.1) eine kreiszylindrische Innenumfangswand (31.1) aufweist, die mit einer korrespondierenden kreiszylindrischen Außenumfangswand (32.1) an der ersten Verstellmutter (24.1) zusammenwirkt, derart, dass die Verbindung von Innenumfangswand (31.1) und Außenumfangswand (32.1) eine erste Passung bildet, welche die erste Verstellmutter (24.1) bezüglich dem ersten Klemmflansch (28.1) zentriert, und der erste Klemmflansch (28.1) eine kreiszylindrische Außenumfangswand (33.1) aufweist, die mit einer korrespondierenden kreiszylindrischen Innenumfangswand (34.1) an dem Getriebegehäuse (12) zusammenwirkt, derart, dass die Verbindung von Außenumfangswand (33.1) und Innenumfangswand (34.1) eine zweite Passung bildet, welche den ersten Klemmflansch (28.1) bezüglich des Getriebegehäuses (12) zentriert.

10. Getriebe nach einem der Ansprüche 5 bis 9, **dadurch gekennzeichnet, dass** die erste Verstellmutter (24.1) eine erste Betätigungskontur (35) aufweist, die ausgebildet ist zum manuellen Drehen der ersten Verstellmutter (24.1) im ersten Innengewinde (22.1) des Getriebegehäuses (12) mittels der Hand einer Person oder zum Drehen der ersten Verstellmutter (24.1) im ersten Innengewinde (22.1) des Getriebegehäuses (12) mittels eines Handwerkzeugs.

11. Getriebe nach einem der Ansprüche 1 bis 10, **dadurch gekennzeichnet, dass** zur Bildung der Einstellvorrichtung (17) die zweite Lageranordnung (14.2) ein Axialkräfte abstützendes zweites Wälzlager aufweist, das einen mit der Abtriebswelle (16) fest verbundenen zweiten Innenring und einen im Getriebegehäuse axial verstellbar gelagerten zweiten Außenring aufweist, wobei die axiale Position des zweiten Außenrings des zweiten Wälzlagers mittels einer zweiten Gewindeanordnung einstellbar ist, die ein im Getriebegehäuse (12) festgelegtes zweites Innengewinde und ein mit dem zweiten Innengewinde zusammenwirkendes zweites Außengewinde aufweist, das an einer zweiten Verstellmutter ausgebildet ist, an welcher der zweite Außenring gelagert ist.

12. Getriebe nach Anspruch 11, **dadurch gekennzeichnet, dass** die zweite Verstellmutter einen zweiten Lagerringsitz aufweist, in dem der zweite Außenring des zweiten Wälzlagers axial fixiert ist und die zweite Verstellmutter eine zweite Außenmantelwand aufweist, an der das mit dem zweiten Innengewinde des Getriebegehäuses (12) zusammenwirkende zweite Außengewinde ausgebildet ist.

13. Getriebe nach Anspruch 11 oder 12, **dadurch gekennzeichnet, dass** das zweite Innengewinde des Getriebegehäuses (12) und das zweite Außengewinde der zweiten Verstellmutter als ein Feingewinde mit der Steigung 1.0, 0.75 oder 0.5 ausgebildet sind.

14. Getriebe nach einem der Ansprüche 11 bis 13, **dadurch gekennzeichnet, dass** die Einstellvorrichtung (17) einen zweiten Klemmflansch aufweist, welcher mittels zweiter Flanschschrauben an einem zweiten Flanschsitz des Getriebegehäuses befestigt ist und in seiner befestigten Anordnung am zweiten Flanschsitz des Getriebegehäuses die zweite Verstellmutter axial verspannt und/oder festklemmt, so dass das zweite Innengewinde des Getriebegehäuse und das zweite Außengewinde der zweiten Verstellmutter gegen selbsttätiges Lösen gesichert ist.

15. Getriebe nach einem der Ansprüche 11 bis 14, **dadurch gekennzeichnet, dass** der zweite Klemmflansch eine kreiszylindrische Innenumfangswand aufweist, die mit einer korrespondierenden kreiszylindrischen Außenumfangswand an der zweiten Verstellmutter zusammenwirkt, derart, dass die Verbindung von Innenumfangswand und Außenumfangswand eine erste Passung bildet, welche die zweite Verstellmutter bezüglich dem zweiten Klemmflansch zentriert, und der zweite Klemmflansch eine kreiszylindrische Außenumfangswand aufweist, die mit einer korrespondierenden kreiszylindrischen Innenumfangswand an dem Getriebegehäuse (12) zusammenwirkt, derart, dass die Verbindung von Außenumfangswand und Innenumfangswand eine zweite Passung bildet, welche den zweiten Klemmflansch bezüglich des Getriebegehäuses (12) zentriert.

## Claims

1. Gearbox, comprising a gearbox housing (12), a input shaft (13) rotatably mounted in the gearbox housing (12) by means of a first bearing arrangement (14.1) having a first bevel gear (15.1), and an output shaft (16) rotatably mounted in the gearbox housing (12) by means of a second bearing arrangement (14.2) having a second bevel gear (15.2) meshing with the first bevel gear (15.1), and an adjusting device (17) for adjusting the backlash between the first bevel gear (15.1) and the second bevel gear (15.2) by axially adjusting the first bevel gear (15.1) and/or the second bevel gear (15.2), wherein the adjusting device (17) comprises a rolling bearing (18.1, 18.2) which has an inner ring (19.1, 19.2) fixedly connected to the input shaft (13) or the output shaft (16) and an outer ring (20.1, 20.2) axially adjustably mounted in the gearbox housing (12), wherein the axial position of the outer ring (20.1, 20.2) of the rolling bearing (18.1, 18.2) is adjustable by means of a threaded arrangement (21.1, 21.2) which has an internal thread (22.1, 22.2) set in the gearbox housing (12) and an outer thread (23.1, 23.2) cooperating with the internal thread (22.1, 22.2), which is formed on an adjusting nut (24.1, 24.2) of the adjusting device (17), on which the outer ring (20.1, 20.2) is supported, wherein the adjusting device (17) has a clamping flange (28.1) which is fastened to a flange seat (30.1) of the gearbox housing (12) by means of flange screws (29.1) and in its fastened arrangement on the flange seat (30.1) of the gearbox housing (12) axially braces and/or clamps the adjusting nut (24.1, 24.2) so that the threaded arrangement (21.1, 21.2) is secured against automatic loosening, **characterized in that** the clamping flange (28.1) has a circular cylindrical inner circumferential wall (31.1) which cooperates with a corresponding circular cylindrical outer circumferential wall (32.1) on the adjusting nut (24.1, 24.2), such that the connection of the inner circumferential wall (31.1) and the outer circumferential wall (32.1) forms a first fit which centers the adjusting nut (24.1, 24.2) with respect to the clamping flange (28.1), and the clamping flange (28.1) has a circular cylindrical outer circumferential wall (33.1) which cooperates with a corresponding circular cylindrical inner peripheral wall (34.1) on the gearbox housing (12), such that the connection of the outer circumferential wall (33.1) and the inner peripheral wall (34.1) forms a second fit which centers the clamping flange (28.1) relative to the gearbox housing (12).

2. Gearbox according to claim 1, **characterized in that** the adjusting nut (24.1, 24.2) has a bearing ring seat (25.1) in which the outer ring (20.1, 20.2) of the rolling bearing (18.1, 18.2) is axially fixed and the adjusting nut (24.1, 24.2) has an outer casing wall on which the outer thread (23.1, 23.2) cooperating with the internal thread (22.1, 22.2) of the gearbox housing (12) is formed.

3. Gearbox according to claim 1 or 2, **characterized in that** the thread arrangement (21.1, 21.2) is designed as a fine thread, in particular as a fine thread with a pitch of 1.0, 0.75 or 0.5.

4. Gearbox according to any one of claims 1 to 3, **characterized in that** the adjusting nut (24.1, 24.2) has an actuating contour (35) which is designed for manually turning the adjusting nut (24.1, 24.2) in the internal thread (22. 1, 22.2) of the gearbox housing (12) by means of the hand of a person or for turning the adjusting nut (24.1, 24.2) in the internal thread (22.1, 22.2) of the gearbox housing (12) by means of a hand tool, in particular a flange wrench.

5. Gearbox according to any one of claims 1 to 4, **characterized in that**, in order to form the adjusting device (17), the first bearing arrangement has a first rolling bearing which supports axial forces and has a first inner ring which is fixedly connected to the drive shaft and a first outer ring (20.1, 20.2) which is axial adjustably mounted in the gearbox housing, wherein the axial position of the first outer ring (20.1, 20.2) of the first rolling bearing is adjustable by means of a first threaded arrangement, which has a first internal thread fixed in the gear housing and a first outer thread cooperating with the first internal thread, which is formed on a first adjusting nut (24.1, 24.2), on which the first outer ring (20.1, 20.2) is mounted.

6. Gearbox according to claim 5, **characterized in that** the first adjusting nut (24.1, 24.2) has a first bearing ring seat (25.1) in which the first outer ring (20.1) of the first rolling bearing (18.1) is axially fixed and the first adjusting nut (24.1) has a first outer casing wall on which the first outer thread (23.1) cooperating with the first inner thread (22.1) of the gearbox housing (12) is formed.

7. Gearbox according to claim 5 or 6, **characterized in that** the first thread arrangement (21.1) is formed as a fine thread with a pitch of 1.0, 0.75 or 0.5.

8. Gearbox according to any one of claims 5 to 7, **characterized in that** the adjusting device (17) comprises a first clamping flange (28.1) which is fastened by means of first flange screws (29.1) to a first flange seat (30.1) of the gearbox housing (12) and in its fastened arrangement on the first flange seat (30.1) of the gearbox housing (12), the first adjusting nut (24.1) is axially braced and/or clamped so that the first internal thread (22.1) of the gearbox housing (12) and the first external thread (23.1) of the first adjusting nut (24.1) are secured against automatic loosening.

9. Gearbox according to any one of claims 5 to 8, **characterized in that** the first clamping flange (28.1) has a circular cylindrical inner circumferential wall (31.1) that cooperates with a corresponding circular cylindrical outer circumferential wall (32.1) on the first adjusting nut (24.1), such that the connection of the inner circumferential wall (31.1) and the outer circumferential wall (32.1) forms a first fit that centers the first adjusting nut (24.1) with respect to the first clamping flange (28.1), and the first clamping flange (28.1) has a circular cylindrical outer circumferential wall (33.1) which cooperates with a corresponding circular cylindrical inner peripheral wall (34.1) on the gearbox housing (12), such that the connection of outer circumferential wall (33.1) and inner peripheral wall (34.1) forms a second fit which centers the first clamping flange (28.1) with respect to the gearbox housing (12) .

10. Gearbox according to any one of claims 5 to 9, **characterized in that** the first adjusting nut (24.1) comprises a first actuating contour (35) configured to manually rotate the first adjusting nut (24.1) in the first internal thread (22.1) of the gearbox housing (12) by means of a person's hand or to rotate the first adjusting nut (24.1) in the first internal thread (22.1) of the gearbox housing (12) by means of a hand tool.

11. Gearbox according to one of claims 1 to 10, **characterized in that** for forming the adjusting device (17) the second bearing arrangement (14.2) has a second rolling bearing which supports axial forces and has a second inner ring fixedly connected to the output shaft (16) and a second outer ring mounted axially adjustably in the gear housing, the axial position of the second outer ring of the second rolling bearing being adjustable by means of a second threaded arrangement which has a second internal thread fixed in the gearbox housing (12) and a second external thread which interacts with the second internal thread and is formed on a second adjusting nut on which the second outer ring is mounted.

12. Gearbox according to claim 11, **characterized in that** the second adjusting nut has a second bearing ring seat in which the second outer ring of the second rolling bearing is axially fixed and the second adjusting nut has a second outer shell wall on which the second outer thread cooperating with the second inner thread of the gearbox housing (12) is formed.

13. Gearbox according to claim 11 or 12, **characterized in that** the second internal thread of the gearbox housing (12) and the second external thread of the second adjusting nut are formed as a fine thread with a pitch of 1.0, 0.75 or 0.5.

14. Gearbox according to any one of claims 11 to 13, **characterized in that** the adjusting device (17) has a second clamping flange which is fastened to a second flange seat of the gearbox housing by means of second flange screws and, in its fastened arrangement on the second flange seat of the gearbox housing, axially braces and/or clamps the second adjusting nut so that the second internal thread of the gearbox housing and the second external thread of the second adjusting nut are secured against automatic loosening.

15. Gearbox according to any one of claims 11 to 14, **characterized in that** the second clamping flange has a circular cylindrical inner peripheral wall cooperating with a corresponding circular cylindrical outer peripheral wall on the second adjusting nut, such that the connection of the inner peripheral wall and the outer peripheral wall forms a first fit centering the second adjusting nut with respect to the second clamping flange, and the second clamping flange has a circular cylindrical outer peripheral wall which cooperates with a corresponding circular cylindrical inner peripheral wall on the gearbox housing (12), such that the connection of the outer peripheral wall and the inner peripheral wall forms a second fit which centers the second clamping flange with respect to the gearbox housing (12).

## Revendications

1. Transmission, présentant un carter de transmission (12), un arbre d'entraînement (13) qui est monté rotatif dans le carter de transmission au moyen d'un premier agencement de palier (14.1) et qui présente un premier pignon conique (15.1), et un arbre de sortie (16) qui est monté rotatif dans le carter de transmission (12) au moyen d'un deuxième agencement de palier (14.2) et qui présente un deuxième pignon conique (15.2), lequel est en prise par engrènement avec le premier pignon conique (15.1), ainsi qu'un dispositif de réglage (17) servant à régler le jeu d'engrènement des flancs des dents entre le premier pignon conique (15.1) et le deuxième pignon conique (15.2) par déplacement axial du premier pignon conique (15.1) et/ou du deuxième pignon conique (15.2), le dispositif de réglage (17) comprenant un palier à roulement (18.1, 18.2) qui présente une bague intérieure (19.1, 19.2) reliée de manière solidaire avec l'arbre d'entraînement (13) ou l'arbre de sortie (16) et une bague extérieure (20.1, 20.2) montée de manière axialement réglable dans le carter de transmission (12), la position axiale de la bague extérieure (20.1, 20.2) du palier à roulement (18.1, 18.2) étant réglable au moyen d'un agencement fileté (21.1, 21.2) qui présente un filetage intérieur (22.1, 22.2) fixé de manière solidaire dans le carter de transmission (12) et un filetage extérieur (23.1, 23.2) coopérant avec le filetage intérieur (22.1, 22.2) qui est réalisé sur un écrou de réglage (24.1, 24.2) du dispositif de réglage (17), sur lequel prend appui la bague extérieure (20.1, 20.2), le dispositif de réglage (17) comportant une bride de serrage (28. 1) qui est fixée au moyen de vis de bride (29.1) sur un siège de bride (30.1) du carter de transmission (12) et qui, dans sa disposition fixée sur le siège de bride (30.1) du carter transmission (12), serre et/ou bloque axialement l'écrou de réglage (24.1, 24.2), de telle sorte que l'agencement fileté (21.1, 21.2) est assuré contre un desserrage automatique, **caractérisée en ce que** la bride de serrage (28.1) présente une paroi périphérique intérieure (31.1) cylindrique circulaire, qui coopère avec une paroi périphérique extérieure (32.1) cylindrique circulaire correspondante sur l'écrou de réglage (24.1, 24.2), de telle sorte que la liaison entre la paroi périphérique intérieure (31.1) et la paroi périphérique extérieure (32.2) forme un premier ajustement qui centre l'écrou de réglage (24.1, 24.2) par rapport à la bride de serrage (28.1), et **en ce que** la bride de serrage (28.1) comporte une paroi périphérique extérieure (33.1) cylindrique circulaire qui coopère avec une paroi périphérique intérieure (34.1) cylindrique circulaire correspondante sur le carter de transmission (12), de telle sorte que la liaison entre la paroi périphérique extérieure (33.1) et la paroi périphérique intérieure (34.1) forme un deuxième ajustement qui centre la bride de serrage (28.1) par rapport au carter de transmission (12).

2. Transmission selon la revendication 1, **caractérisée en ce que** l'écrou de réglage (24. 1, 24.2) présente un siège de bague de palier (25.1) dans lequel la bague extérieure (20.1, 20.2) du palier à roulement (18.1, 18.2) est fixée axialement et l'écrou de réglage (24.1, 24.2) présente une paroi d'enveloppe extérieure sur laquelle est réalisé le filetage extérieur (23.1, 23.2) coopérant avec le filetage intérieur (22.1, 22.2) du carter de transmission (12).

3. Transmission selon la revendication 1 ou 2, **caractérisée en ce que** l'agencement de filetage (21.1, 21.2) est réalisé sous la forme d'un filetage fin, en particulier sous la forme d'un filetage fin avec un pas de 1.0 mm, 0.75 mm ou 0.5 mm.

4. Transmission selon l'une des revendications 1 à 3, **caractérisée en ce que** l'écrou de réglage (24.1, 24.2) présente un contour d'actionnement (35) qui est réalisé pour faire tourner manuellement l'écrou de réglage (24.1, 24.2) dans le filetage intérieur (22.1, 22.2) du carter de transmission (12) au moyen de la main d'une personne ou pour faire tourner l'écrou de réglage (24.1, 24.2) dans le filetage intérieur (22.1, 22.2) du carter de transmission (12) au moyen d'un outil manuel, en particulier d'une clé à bride.

5. Transmission selon l'une des revendications 1 à 4, **caractérisée en ce que** pour former le dispositif de réglage (17), le premier agencement de palier présente un premier palier à roulement supportant des forces axiales, qui présente une première bague intérieure reliée de manière solidaire à l'arbre d'entraînement et une première bague extérieure (20.1, 20.2) montée de manière axialement réglable dans le carter de transmission, la position axiale de la première bague extérieure (20.1, 20.2) du premier palier à roulement pouvant être réglée au moyen d'un premier agencement fileté qui présente un premier filetage intérieur fixé de manière solidaire dans le carter de transmission et un premier filetage extérieur coopérant avec le premier filetage intérieur, qui est réalisé sur un premier écrou de réglage (24.1, 24.2) sur lequel la première bague extérieure (20.1, 20.2) est montée.

6. Transmission selon la revendication 5, **caractérisée en ce que** le premier écrou de réglage (24.1, 24.2) présente un premier siège de bague de roulement (25.1) dans lequel la première bague extérieure (20.1) du premier palier à roulement (18.1) est fixée axialement et **en ce que** le premier écrou de réglage (24.1) présente une première paroi d'enveloppe extérieure sur laquelle est réalisé le premier filetage extérieur (23.1) coopérant avec le premier filetage intérieur (22.1) du carter de transmission (12).

7. Transmission selon la revendication 5 ou 6, **caractérisée en ce que** le premier agencement de filetage (21. 1) est réalisé sous la forme d'un filetage fin avec un pas de 1.0 mm, 0.75 mm ou 0.5 mm.

8. Transmission selon l'une quelconque des revendications 5 à 7, **caractérisée en ce que** le dispositif de réglage (17) présente une première bride de serrage (28.1) qui est fixée à un premier siège de bride (30.1) du carter de transmission (12) au moyen de premières vis de bride (29.1) et qui, dans sa disposition fixée sur le premier siège de bride (30. 1) du carter de boîte de vitesses (12), serre et/ou bloque axialement le premier écrou de réglage (24.1), de telle sorte que le premier filetage intérieur (22.1) du carter de transmission (12) et le premier filetage extérieur (32.1) du premier écrou de réglage (24.1) sont assurés contre un desserrage automatique.

9. Transmission selon l'une quelconque des revendications 5 à 8, **caractérisée en ce que** la première bride de serrage (28.1) présente une paroi périphérique intérieure (31.1) cylindrique circulaire qui coopère avec une paroi périphérique extérieure (32.1) cylindrique circulaire correspondante sur le premier écrou de réglage (24.1), de telle sorte que la liaison entre la paroi périphérique intérieure (31.1) et la paroi périphérique extérieure (32.1) forme un premier ajustement qui centre le premier écrou de réglage (24.1) par rapport à la première bride de serrage (28.1), et **en ce que** la première bride de serrage (28.1) présente une paroi périphérique extérieure (33.1) cylindrique circulaire qui coopère avec une paroi périphérique intérieure (34.1) cylindrique circulaire correspondante sur le carter de transmission (12), de telle sorte que la liaison entre la paroi périphérique extérieure (33.1) et la paroi périphérique intérieure (34.1) forme un deuxième ajustement qui centre la première bride de serrage (28.1) par rapport au carter de transmission (12) .

10. Transmission selon l'une quelconque des revendications 5 à 9, **caractérisée en ce que** le premier écrou de réglage (24.1) présente un premier contour d'actionnement (35) réalisé pour faire tourner manuellement le premier écrou de réglage (24.1) dans le premier filetage interne (22.1) du carter de transmission (12) au moyen de la main d'une personne ou pour faire tourner le premier écrou de réglage (24.1) dans le premier filetage interne (22.1) du carter de transmission (12) au moyen d'un outil manuel.

11. Transmission selon l'une des revendications 1 à 10, **caractérisée en ce que**, pour former le dispositif de réglage (17), le deuxième agencement de palier (14. 2) présente un deuxième palier à roulement supportant des forces axiales, qui présente une deuxième bague intérieure reliée de manière solidaire à l'arbre de sortie (16) et une deuxième bague extérieure logée de manière axialement réglable dans le carter de la boîte de vitesses, la position axiale de la deuxième bague extérieure du deuxième palier à roulement pouvant être réglée au moyen d'un deuxième agencement fileté, qui présente un deuxième filetage intérieur fixé de manière solidaire dans le carter de la transmission (12) et un deuxième filetage extérieur coopérant avec le deuxième filetage intérieur, qui est réalisé sur un deuxième écrou de réglage, sur lequel la deuxième bague extérieure est montée.

12. Transmission selon la revendication 11, **caractérisée en ce que** le deuxième écrou de réglage présente un deuxième siège de bague de roulement dans lequel la deuxième bague extérieure du deuxième palier à roulement est fixée axialement et le deuxième écrou de réglage présente une deuxième paroi d'enveloppe extérieure sur laquelle est réalisé le deuxième filetage extérieur coopérant avec le deuxième filetage intérieur du carter de transmission (12).

13. Transmission selon la revendication 11 ou 12, **caractérisée en ce que** le deuxième filetage interne du carter de transmission (12) et le deuxième filetage externe du deuxième écrou de réglage sont réalisés sous la forme d'un filetage fin avec un pas de 1.0 mm, 0.75 mm ou 0.5 mm.

14. Transmission selon l'une quelconque des revendications 11 à 13, **caractérisée en ce que** le dispositif de réglage (17) présente une deuxième bride de serrage qui est fixée à un deuxième siège de bride du carter de transmission au moyen de deuxièmes vis de bride et qui, dans sa disposition fixée sur le deuxième siège de bride du carter de transmission, serre et/ou bloque axialement le deuxième écrou de réglage, de telle sorte que le deuxième filetage intérieur du carter de transmission et le deuxième filetage extérieur du deuxième écrou de réglage sont assurés contre un desserrage automatique.

15. Transmission selon l'une quelconque des revendications 11 à 14, **caractérisée en ce que** la deuxième bride de serrage présente une paroi périphérique interne cylindrique circulaire qui coopère avec une paroi périphérique externe cylindrique circulaire correspondante sur le deuxième écrou de réglage, de telle sorte que la liaison entre la paroi périphérique interne et la paroi périphérique externe forme un premier ajustement qui centre le deuxième écrou de réglage par rapport à la deuxième bride de serrage, et **en ce que** la deuxième bride de serrage présente une paroi périphérique extérieure cylindrique circulaire qui coopère avec une paroi périphérique intérieure cylindrique circulaire correspondante sur le carter de transmission (12), de telle sorte que la liaison de la paroi périphérique extérieure et de la paroi périphérique intérieure forme un deuxième ajustement qui centre la deuxième bride de serrage par rapport au carter de transmission (12).
